Europäisches Patentamt

European Patent Office

Office européen des brevets

(19)

(11) Publication number : **0 197 972**

**B1**

(12)

# EUROPEAN PATENT SPECIFICATION

(45) Date of publication of patent specification :
30.11.88

(51) Int. Cl.⁴ : **B 65 G 61/00**, B 65 G 47/90

(21) Application number : 85904815.9

(22) Date of filing : 24.09.85

(86) International application number :
PCT/EP 85/00496

(87) International publication number :
WO/8602059 (10.04.86 Gazette 86/08)

---

(54) **ELEMENT MOVING DEVICE.**

---

(30) Priority : 28.09.84 BE 2060510

(43) Date of publication of application :
22.10.86 Bulletin 86/43

(45) Publication of the grant of the patent :
30.11.88 Bulletin 88/48

(84) Designated contracting states :
DE FR GB

(56) References cited :
EP-A- 0 059 477
FR-A- 2 360 485
FR-A- 2 555 492
US-A- 4 505 166

(73) Proprietor : **BELL TELEPHONE MANUFACTURING
COMPANY Naamloze Vennootschap
Francis Wellesplein 1
B-2018 Antwerp (BE)**

(72) Inventor : **VERHAEGHEN, Jacobus, Jan, Leon, Gerard
Hendrik de Braeckeleerlaan, 37
B-2630 Aartselaar (BE)**

(74) Representative : **Vermeersch, Robert et al
BELL TELEPHONE MANUFACTURING COMPANY
Naamloze Vennootschap Patent Department Francis
Wellesplein 1
B-2000 Antwerp (BE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an element moving device including a supporting structure movable in a predetermined direction and having a rotatable axle coupled to a movable element, means to exert forces, and first and second transmission means controlled by said force exerting means and each able to control the displacement of said axle in said direction as well as the rotation of said axle in either one of two directions of rotation, in such a way that when said second transmission means are displaced in said direction and in a first or second sense they tend to rotate said axle in a respective first or second direction of rotation which is opposite to that in which said first transmission means tend to rotate said axle when said first transmission means are also displaced in said direction and in said first or second sense.

Such a device is already known from BE-A-897 194. Therein the rotatable axle is constituted by the first end of a rotatable first arm whose second end is coupled with the movable element. This axle forms part of a hinge by which the first arm is connected to the first transmission means and a second arm is hingedly connected at its first end to the second transmission means and at its second end to a point of the first arm located between the ends thereof.

A drawback of this known device is that a displacement of the first and/or second transmission means does not give rise to an accurate rotation and/or displacement of the axle and therefore also of the element, due to the presence of the hinges which always have some play.

An object of the present invention is to provide an element moving device of the above type, but which does not present this drawback.

According to the invention as defined by independent claim 1, this object is achieved due to the fact that said first and second transmission means are constituted by first and second conveyor belts which both make contact with said axle.

Because the conveyor belts thus both operate directly on the axle a displacement of each such a conveyor belt gives rise to an accurate rotation and/or displacement of the axle.

Another drawback of the known device is due to the fact that the movable element is coupled to the rotatable axle via the first arm so that a rotation of this arm gives rise to an angular displacement of its second end with which the movable element is coupled. To bring this element in a predetermined point of a plane a relatively complicated control of the transmission and of the force exerting means is therefore required.

Another object of the present invention is to provide an element moving device of the above type but which also does not present this drawback.

According to the invention this object is achieved due to the fact that said rotatable axle is coupled to a carriage via third transmission means which are able to displace said carriage in a second direction, said carriage forming part of said element and the first mentioned direction as well as said second direction being both rectilinear.

In this way a rotary movement of the axle is transformed into a rectilinear displacement of the element in the second direction so that the control of the first and second transmission means and of the force exerting means to bring the movable element in a predetermined part of a plane can be relatively simple.

The above mentioned and other objects and features of the invention will become more apparent and the invention itself will be best understood by referring to the following description of an embodiment taken in conjunction with the accompanying drawings in which :

Fig. 1 is a schematic perspective view of an element moving device according to the invention ; and

Fig. 2 is a schematic perspective view of part II of Fig. 1.

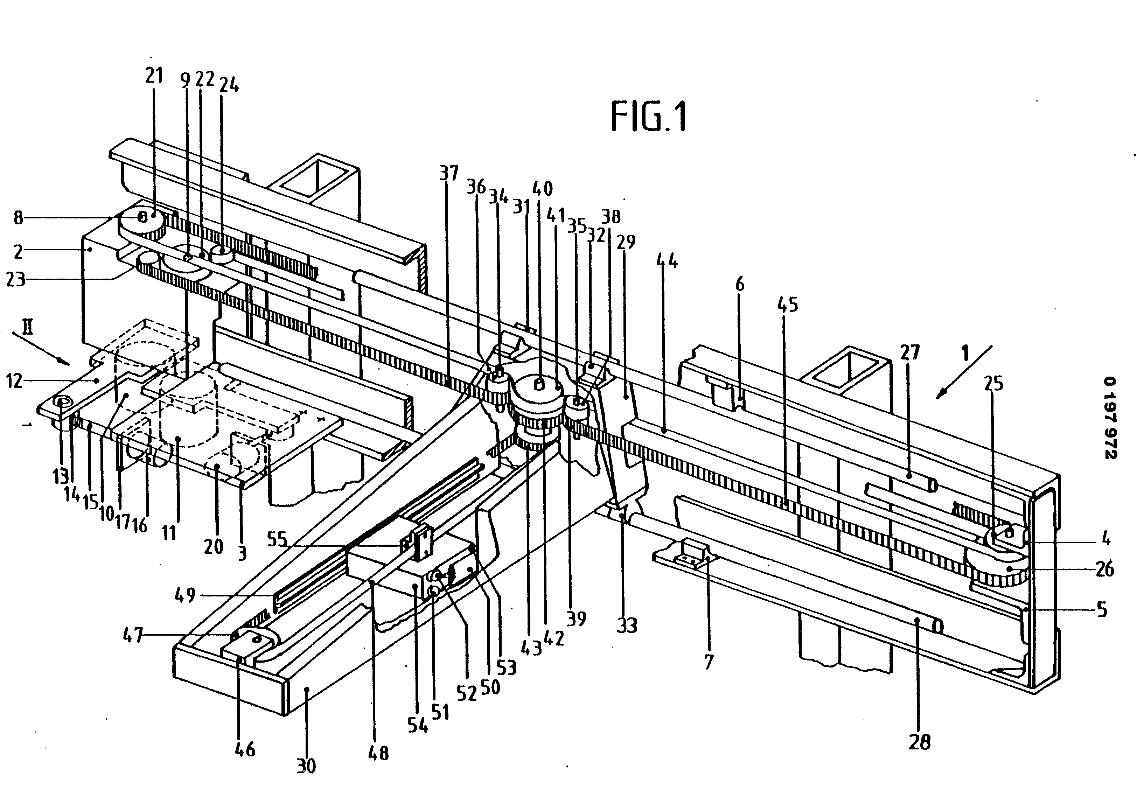

The element moving device shown in Fig. 1 includes a frame generally indicated by reference numeral 1 and the central part of which is cut away. This frame 1 includes a housing 2, a supporting plate 3 and brackets such as 4, 5, 6 and 7. Inside the housing 2 the shafts 8 and 9 of main stepper motors 10 and 11 are rotatably mounted in a not shown but obvious way respectively.

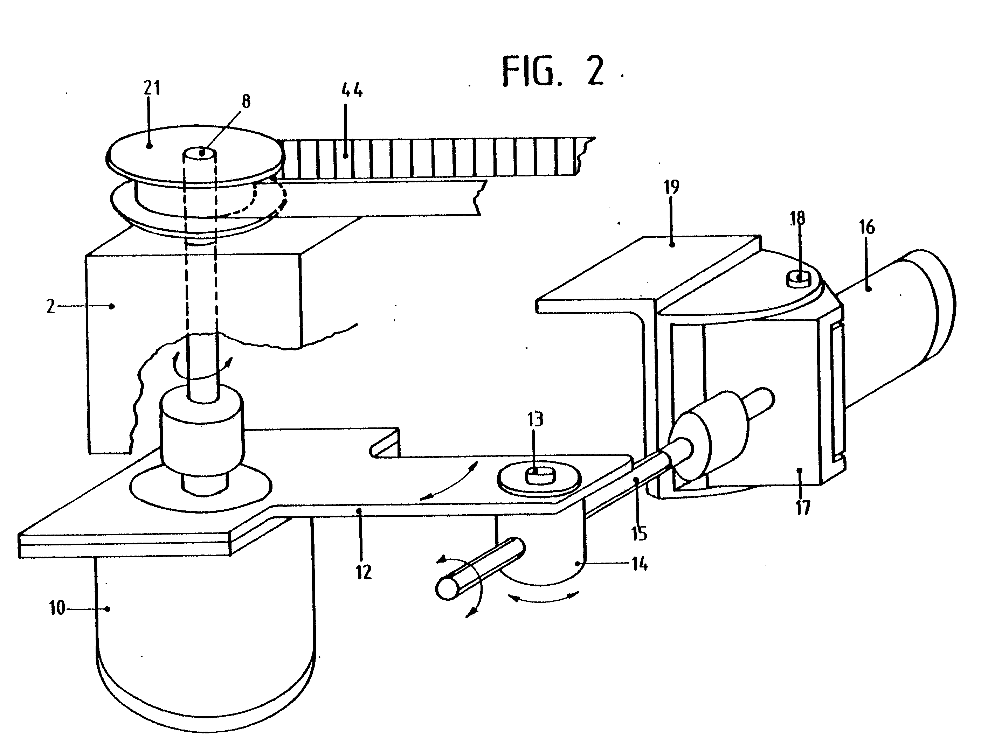

As shown in more detail in Fig. 2, the larger part of a T-shaped plate 12 which extends below the housing 2 is fixed on the upper side of the body of motor 10, whilst the smaller part of this plate 12 carries an axle 13 in which a nut 14 is mounted in a freely rotatably way. The screw treaded shaft 15 of an auxiliary stepper motor 16 engages with the nut 14. The motor 16 is mounted on a piece 17 which is pivoted about an axle 18 fixed in a support 19 secured to the lower side of supporting plate 3.

The main stepper motor 11 and an auxiliary stepper motor 20 are mounted and connected in a similar way as the stepper motors 10 and 16 respectively.

At the upper side of housing 2 toothed wheels 21 and 22 are fixedly mounted on the upper ends of the above mentioned motor shafts 8 and 9 respectively. This housing 2 also carries two freely rotatable rollers 23 and 24, and the above mentioned brackets 4 and 5 carry freely rotatable toothed wheel 25 and wheel 26 respectively. The wheels 21 and 25 are mounted in a same plane and the same is true for the wheels 22 and 26 and the rollers 23 and 24.

Two longitudinal guide rods 27 and 28 are fixed in the above mentioned brackets such as 6 and 7. A supporting structure or sled 29 which is integral with a cantilever bridge piece 30 which constitutes another supporting structure is slidably mounted on the guide rods 27 and 28 as it is provided at its lower and upper sides with guide pieces such as 31, 32 and 33 which engage with these rods. The cantilever bridge piece 30 entends in a Y-direction perpendicular to the X-direction of the guide rods 27 and 28. The sled 29 carries fixedly mounted axles 34 and 35 on which respective pairs of rollers 36, 37 and 38, 39 are mounted in a freely rotatable way, as well as a fixed axle 40 about which an assembly of like toothed wheels 41, 42 and 43 is freely rotatable. Wheel 41 is located in the same plane as the wheels 21 and 25 and the rollers 36 and 38, and an endless toothed conveyor belt 44 engages with these wheels and rollers. Wheel 42 is located in the same plane as the wheels 22 and 26 and the rollers 23, 24, 37 and 39 and an endless toothed conveyor belt 45 engages with these wheels and rollere. The cantilever bridge piece 30 carries a bracket 46 bearing a freely rotatable toothed wheel 47 which is located in the same plane as wheel 43, and endless toothed conveyor belt 48 engaging with these wheels. Lateral walls of the bridge piece 30 are provided with T-shaped elements 49 and 50 respectively, the latter element 50 being visible through a cut-out portion of the bridge piece 30. These T-shaped elements constitute guide pieces for rollers such as 51, 52, 53 of a displaceable carriage 54. At its upper side this carriage 54 is integral with a piece 55 fixed on the conveyor belt 48.

The above described device operates as follows. When stepper motors 10 and 11 drive the wheels 21 and 22 at the same speed in opposite directions, i. e. such that the front parts of the conveyor belts 44 and 45 move in the same direction and at the same speed, the like wheels 41 and 42 are submitted to identical opposite torques so that the wheel 43 is then not rotated. However, the sled 29 is then displaced in the same direction as the front parts of the conveyor belts 44 and 45 in an X-direction defined by each of the guide rods 27 and 28. Because the wheel 43 is not rotated the conveyor belt 48 and the carriage 54 both remain stationary with respect to the sled 29.

On the contrary, when the stepper motors 10 and 11 drive the wheels 21 and 22 at the same speed in the same direction, i. e. such that the front parts of the conveyor belts 44 and 45 move in opposite directions and at the same speed, the like wheels 41 and 42 are submitted to identical torques acting in the same direction so that the sled 29 remains stationary. However, the wheel 43 is then rotated so that the conveyor belt 48 is then displaced together with the carriage 54 due to the conveyor belt 48 being fixed on the piece 55 which is integral with this carriage 54. This displacement occurs along the Y-direction which is at right angles to the X-direction above mentioned.

It is clear that when the stepper motors 10 and 11 drive the wheels 21 and 22 at different speeds both a displacement of the sled 29 along the X-direction and of the carriage 54 along the Y-direction occur.

By associating the auxiliary stepper motor 16 to the main stepper motor 10 the displacement of the conveyor belt 44 driven by this main motor 16 can be accurately adjusted, and the same is true for the conveyor belt 45 driven by the main stepper motor 11 to which the auxiliary stepper motor 20 is associated. This is described hereinafter for the motors 10, 16 and conveyor belt 44 by making reference to Fig. 2.

By each step of the main motor 10 its shaft 8 is rotated over a predetermined unit angle and the conveyor belt 44 is displaced over a predetermined unit distance. This means that in this way the conveyor belt 44 can only be displaced over multiples of this unit distance. However, by the use of the auxiliary motor 16 this displacement can be regulated to a fraction of this unit distance. Indeed, supposing, for simplicity reasons, that a step of this auxiliary motor 16 produces a same unit angular displacement of its shaft 15, as does the main motor 10 with its shaft 8, only a fraction of this unit angular displacement is communicated to the plate 12 due to the fact that the shaft 15 is screw threaded. By this angular displacement the stator or body 10 of the main motor 10 is pivoted around the axis of its shaft 8 over the same angle. Since the motor 10 is a stepper motor it has a so-called holding torque, i. e. the torque which keeps its rotor in well defined positions with respect to its stator. Hence, the last mentioned angular displacement of the main motor body by the auxiliary motor is accurately transmitted to the shaft 8 and therefore also to the associated conveyor belt 44.

In a preferred embodiment use is made of stepper motors having an angular speed of 1 000 rpm and wherein one step corresponds to 1/800 of a rotation. The coupling between each main stepper motor 10, 11 and its associated conveyor belt 44, 45 is such that each step of the motor 10, 11 corresponds to a linear displacement of 0.2 millimeter of the belt 44, 45. The transmission ratio between the main stepper motor 10, 11 and its associated auxiliary stepper motor 16, 20 is equal to 1/40, so that the belt 44, 45 may be displaced in steps of 0.2/40 mm.

Instead of stepper motors also other motors could be used as auxiliary motor.

In another embodiment (not shown) of the above described element moving device the bridge piece 30 and all the items 46 to 55 are replaced by an arm radially mounted on wheel 43. A rotative motion of this arm 40 is thus substituted for the rectilinear motion of the displaceable carriage 54 in the Y-direction.

By the use of suitable driving devices elements coupled to the carriage 54 or to the end of the last mentioned arm may also be displaced in vertical direction and/or rotated.

The device described above is particularly suitable for use in robots.

While the principles of the invention have been described above in connection with specific apparatus, it is to be clearly understood that this description is made only by way of example and not as a limitation on the scope of the invention, which is defined by the appended claims.

**Claims**

1. Element moving device including a supporting structure (29) movable in a predetermined direction (X) and having a rotatable axle (41-43) coupled to a movable element (54, 55), means (10, 16 ; 11, 20) to exert forces, and first (44) and second (45) transmission means controlled by said force exerting means and each able to control the displacement of said axle in said direction as well as the rotation of said axle in either one of two directions of rotation, in such a way that when said second transmission means are displaced in said direction (X) and in a first or second sense they tend to rotate said axle (41-43) in a respective first or second direction of rotation which is opposite to that in which said first transmission means (44) tend to rotate said axle (41-43) when said first transmission means (44) are also displaced in said direction and in said first or second sense, characterized in that said first and second transmission means are constituted by first (44) and second (45) conveyor belts which both make contact with said axle (41-43).

2. Element moving device according to claim 1, characterized in that said rotatable axle (41-43) is coupled to a carriage (54, 55) via third transmission means (48) which are able to displace said carriage in a second direction (Y), said carriage forming part of said element and the first mentioned direction as well as said second direction being both rectilinear.

3. Element moving device according to claim 2, characterized in that said third transmission means are constituted by a third conveyer belt (48).

4. Element moving device according to claim 2, characterized in that said supporting structure (29) is constituted by a sled which is integral with a bridge piece (30) supporting said carriage and extending in said second direction (Y).

5. Element moving device according to claim 1, characterized in that said first (44) and second (45) conveyor belts are driven by first (10, 16) and second (11, 10) driving means which constitute said force exerting means and each comprises a first (10, 11) and a second (16, 20) stepper motor, the stator of said first stepper motor being coupled to the shaft (15) of said second stepper motor through means (15, 12) able to transform an angular displacement step of said shaft into a reduced angular displacement of said stator.

**Patentansprüche**

1. Bauteilverschiebevorrichtung mit einer in einer vorgegebenen Richtung (X) verschiebbaren und eine mit einem verschiebbaren Bauteil (54, 55) gekoppelte drehbaren Achse (41-43) aufweisenden Traganordnung (29), Mitteln (10, 16 ; 11, 20) zum Ausüben von Kräften, und ersten (44) und zweiten (45), von den Kraft ausübenden Mitteln gesteuerten Übertragungsmitteln, durch welche jeweils die Verschiebung der Achse in der vorgegebenen Richtung sowie die Drehung der Achse in einer von zwei Drehrichtungen so steuerbar sind, daß, wenn die zweiten Übertragungsmittel in der vorgegebenen Richtung (X) und in einem ersten oder zweiten Richtungssinn verschoben sind, sie die Achse (41-43) in jeweils einer ersten oder zweiten Drehrichtung drehen, die entgegengesetzt zu der Richtung ist, in der die ersten Übertragungsmittel (44) die Achse (41-43) drehen, wenn sie ebenfalls in der vorgegebenen Richtung und in dem ersten oder zweiten Richtungssinn verschoben sind, dadurch gekennzeichnet, daß die ersten und zweiten Übertragungsmittel durch erste (44) und zweite (45) Transportbänder gebildet sind, die beide an der Achse (41-43) anliegen.

2. Bauteilverschiebevorrichtung nach Anspruch 1, dadurch gekennzeichnet, daß die drehbare Achse (41-43) über dritte Übertragungsmittel (48) mit einem Schlitten (54, 55) gekoppelt ist, durch die der Schlitten in einer zweiten Richtung (Y) verschiebbar ist, wobei der Schlitten Teil des Bauteils ist und sowohl die erstgenannte als auch die zweitgenannte Richtung geradlinig sind.

3. Bauteilverschiebevorrichtung nach Anspruch 2, dadurch gekennzeichnet, daß die dritten Übertragungsmittel durch ein drittes Transportband (48) gebildet sind.

4. Bauteilverschiebevorrichtung nach Anspruch 2, dadurch gekennzeichnet, daß die Traganordnung (29) durch einen mit einem den Schlitten tragenden und in der zweiten Richtung (Y) verlaufenden Steg (30) einstückig ausgebildeten weiteren Schlitten gebildet ist.

5. Bauteilverschiebevorrichtung nach Anspruch 1, dadurch gekennzeichnet, daß das erste (44) und das zweite (45) Transportband von ersten (10, 16) und zweiten (11, 20) Antriebsmitteln angetrieben sind, welche die Kraft ausübenden Mittel bilden und jeweils aus einem ersten (10, 11) und einem zweiten (16, 20) Schrittmotor bestehen, wobei der Stator des ersten Schrittmotors mit der Welle (15) des zweiten Schrittmotors über Mittel (15, 12) gekoppelt ist, durch welche ein Winkelverschiebungsschritt der Welle in eine reduzierte Winkelverschiebung des Stators umsetzbar ist.

**Revendications**

1. Dispositif pour déplacer un élément comportant une structure de support (29) mobile dans une direction déterminée (X) et ayant un axe rotatif (41-43) couplé à un élément mobile (54, 55), des moyens (10, 16 ; 11, 20) pour exercer des forces et des premiers (44) et deuxièmes (45) moyens de transmission commandés par lesdits moyens pour exercer des forces et capables chacun de commander le déplacement dudit axe dans ladite direction, de même que la rotation dudit axe dans chacune de deux directions de rotation de sorte que, lorsque lesdits deuxièmes moyens de transmission sont déplacés selon ladite direction (X) et dans un premier ou second sens, ils tendent à faire tourner respectivement ledit axe (41-43) dans une première ou seconde direction de rotation qui est opposée à celle dans laquelle ledits premiers moyens de transmission (44) tendent à faire tourner ledit axe (41-43) lorsque lesdits premiers moyens de transmission (44) sont aussi déplacés selon ladite direction et dans ledit premier ou second sens, caractérisé en ce que lesdits premiers et deuxièmes moyens de transmission sont constitués par une première et une deuxième courroie d'entraînement qui toutes deux sont en contact avec ledit axe (41-43).

2. Dispositif pour déplacer un élément conforme à la revendication 1, caractérisé en ce que ledit axe rotatif (41-43) est couplé à un chariot (54-55) par des troisièmes moyens de transmission (48) susceptibles de déplacer ledit chariot dans une deuxième direction (Y), ledit chariot faisant partie dudit élément et la première direction mentionnée, de même que ladite deuxième direction, étant rectilignes.

3. Dispositif pour déplacer un élément conforme à la revendication 2, caractérisé en ce que lesdits troisièmes moyens de transmission sont constitués par une troisième courroie d'entraînement (48).

4. Dispositif pour déplacer un élément conforme à la revendication 2, caractérisé en ce que ladite structure de support (29) est constituée par un coulisseau faisant partie d'une pièce en pont (30) supportant ledit chariot et s'étendant dans ladite deuxième direction (Y).

5. Dispositif pour déplacer un élément conforme à la revendication 1, caractérisé en ce que lesdites première (44) et deuxième (45) courroies d'entraînement sont entraînées par un premier (10, 11) et un deuxième (16, 20) moteur pas à pas, le stator dudit premier moteur pas à pas étant couplé à l'arbre (15) dudit deuxième moteur pas à pas par des moyens (15, 12) susceptibles de transformer un pas de déplacement angulaire dudit arbre en un déplacement angulaire réduit dudit stator.

FIG.1

0 197 972

FIG. 2

0 197 972